# EUROPEAN PATENT SPECIFICATION

(11) **EP 4 129 796 B1**
(45) Date of publication and mention of the grant of the patent: **06.03.2024**
(21) Application number: 22187786.3
(22) Date of filing: 29.07.2022
(51) Int. Cl.: B60W 60/00, G05D 1/00

(54) **AUTONOMOUS DRIVING VEHICLE CONTROL**
STEUERUNG EINES AUTONOM FAHRENDEN FAHRZEUGS
COMMANDE DE VÉHICULE À CONDUITE AUTONOME

(30) Priority: 02.08.2021 CN 202110881012
(43) Date of publication of application: 08.02.2023
(73) Proprietor: BEIJING BAIDU NETCOM SCIENCE TECHNOLOGY CO., LTD., Beijing 100085 (CN)
(72) Inventor: GONG, Guohao, Beijing, 100085 (CN); LIU, Yingnan, Beijing, 100085 (CN); YU, Ning, Beijing, 100085 (CN); XUE, Jingjing, Beijing, 100085 (CN); YAN, Jing, Beijing, 100085 (CN); LI, Yongchen, Beijing, 100085 (CN); QIN, Shenglin, Beijing, 100085 (CN)
(74) Representative: dompatent von Kreisler Selting Werner - Partnerschaft von Patent- und Rechtsanwälten mbB

(56) References cited:
- US-A1- 2017 308 082

## Description

### Field of the Disclosure

The present disclosure relates to the field of computer technologies, specifically to the field of artificial intelligence technologies such as intelligent transportation and autonomous driving technologies, and in particular, to an autonomous driving vehicle control method and apparatus, an electronic device and a readable storage medium.

### Background of the Disclosure

In order to ensure the safe driving of autonomous driving vehicles, when the autonomous driving vehicles encounter emergencies, such as sudden individual needs of passengers in the vehicles, emergencies in vehicle operation scheduling arrangement, and bad weather conditions in operation park sections, relevant intervention in the autonomous driving vehicles is required.

Currently, a solution for an autonomous driving vehicle to deal with emergencies is to intervene the driving of the autonomous driving vehicle by an operator in the autonomous driving vehicle by clicking a human-computer interaction Application (APP) button or clicking a hardware button in the autonomous driving vehicle.

A patent application US2017308082A1, published on October 26, 2017, entitled "Remote control and concierge service for an autonomous transit vehicle fleet", relates to a method for assisting autonomous vehicles. An autonomous vehicle communicates events, including when the autonomous vehicle determines that a threshold risk level has been met, to a control center having two-way communication with the autonomous vehicle. The events include a passenger pressing a passenger assistance button or a passenger pressing an emergency stop button. The autonomous vehicle can record an event, send a signal, and initiate a response or a dialogue with the control center, and then an operator of the control center can take control of the vehicle.

### Summary of the Disclosure

The invention is set out in the appended set of claims.

As can be seen from the above technical solutions, on the one hand, according to embodiments of the present disclosure, a communication link between an autonomous driving vehicle and a cloud is constructed, and then emergency information provided by a passenger of the autonomous driving vehicle is reported to the cloud based on the communication link, so that control information of the autonomous driving vehicle fed back by the cloud in response to a trigger operation of an agent of the cloud based on the emergency information can be received, and the driving of the autonomous driving vehicle can be controlled according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and remote intervention in the autonomous driving vehicle, so that the autonomous driving vehicle can have the capability to better deal with the emergencies, thereby ensuring the safety and reliability of the driving of the autonomous driving vehicle.

As can be seen from the above technical solutions, on the other hand, according to embodiments of the present disclosure, a communication link between an autonomous driving vehicle and a cloud is constructed, and then emergency information provided by a passenger of the autonomous driving vehicle reported by the autonomous driving vehicle is received based on the communication link, so that control information of the autonomous driving vehicle can be fed back to the autonomous driving vehicle in response to a trigger operation of an agent of the cloud based on the emergency information, to allow the autonomous driving vehicle to control the driving of the autonomous driving vehicle according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and intervention in the autonomous driving vehicle, so that the autonomous driving vehicle can have the capability to better deal with the emergencies, thereby ensuring the safety and reliability of the driving of the autonomous driving vehicle.

### Brief Description of Drawings

The accompanying drawings are intended to provide a better understanding of the solutions and do not constitute a limitation on the present disclosure. In the drawings,
FIG. 1 is a schematic diagram according to a first embodiment of the present disclosure;
FIG. 2 is a schematic diagram according to a second embodiment of the present disclosure;
FIG. 3 is a schematic diagram according to a third embodiment of the present disclosure;
FIG. 4 is a schematic diagram according to a fourth embodiment of the present disclosure;
FIG. 5 is a schematic diagram according to a fifth embodiment of the present disclosure; and
FIG. 6 is a block diagram of an electronic device configured to implement a method for controlling autonomous driving vehicle according to an embodiment of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary.

It is to be noted that the terminal device involved in the embodiments of the present disclosure may include, but is not limited to, smart devices such as mobile phones, Personal Digital Assistants (PDAs), wireless handheld devices, and Tablet Computers. The display device may include, but is not limited to, devices with a display function such as personal computers and televisions.

In addition, the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

With the continuous development of the autonomous driving technology, there is no driver in operating autonomous driving vehicles, such as operating autonomous driving vehicles. In the daily operation of the autonomous driving vehicles, some emergencies may occur, such as passengers requiring medical treatment, emergencies in vehicle operation scheduling arrangement and bad weather conditions in operating regions. In order to deal with possible emergencies and ensure the safe driving of the autonomous driving vehicles, relevant intervention in the driving of the autonomous driving vehicles is required.

Currently, a solution for an autonomous driving vehicle to deal with emergencies is to intervene the driving of the autonomous driving vehicle by an operator in the autonomous driving vehicle by clicking a human-computer interaction APP button or clicking a hardware button in the autonomous driving vehicle.

Therefore, there is an urgent need to provide a method for controlling autonomous driving vehicle, which can accurately and effectively realize remote control and remote intervention in the autonomous driving vehicle, so that the autonomous driving vehicle can have the capability to deal with the emergencies, thereby ensuring the safety and reliability of the driving of the autonomous driving vehicle.

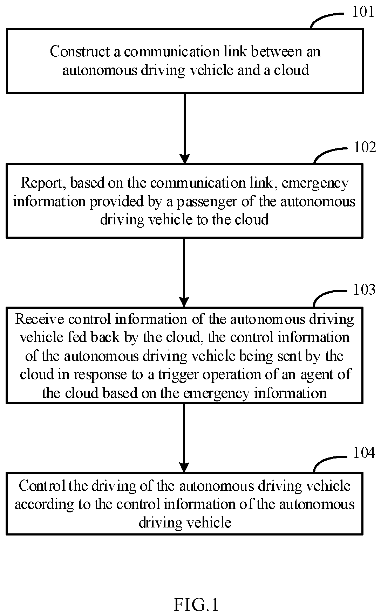

FIG. 1 is a schematic diagram according to a first embodiment of the present disclosure, as shown in FIG. 1.

In 101, a communication link between an autonomous driving vehicle and a cloud is constructed.

In 102, emergency information provided by a passenger of the autonomous driving vehicle to the cloud is reported based on the communication link.

In 103, control information of the autonomous driving vehicle fed back by the cloud is received, the control information of the autonomous driving vehicle being sent by the cloud in response to a trigger operation of an agent of the cloud based on the emergency information.

In 104, the driving of the autonomous driving vehicle is controlled according to the control information of the autonomous driving vehicle.

It is to be noted that 101 to 104 may be partially or wholly performed by an APP located in a local terminal of the autonomous driving vehicle, or a functional unit arranged in an APP located in a local terminal of the autonomous driving vehicle such as a plug-in or a Software Development Kit (SDK), which is not particularly limited in this embodiment.

It may be understood that the APP may be a nativeApp installed on a local terminal of the autonomous driving vehicle, or a webApp of a browser on a local terminal of the autonomous driving vehicle, which is not limited in this embodiment.

In this way, a communication link between an autonomous driving vehicle and a cloud is constructed, and then emergency information provided by a passenger of the autonomous driving vehicle is reported to the cloud based on the communication link, so that control information of the autonomous driving vehicle fed back by the cloud in response to a trigger operation of an agent of the cloud based on the emergency information can be received, and the driving of the autonomous driving vehicle can be controlled according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and remote intervention in the autonomous driving vehicle, so that the autonomous driving vehicle can have the capability to better deal with the emergencies, thereby ensuring the safety and reliability of the driving of the autonomous driving vehicle.

In one implementation of this embodiment, in 101, the communication link between the autonomous driving vehicle and the cloud may be constructed in different triggering manners.

During a specific implementation, in 101, the communication link between the autonomous driving vehicle and the cloud is specifically constructed in response to a trigger operation of the passenger of the autonomous driving vehicle.

During this specific implementation, in the case of a sudden personal need of the passenger of the autonomous driving vehicle, the passenger of the autonomous driving vehicle triggers the operation of constructing a communication link with the cloud. The autonomous driving vehicle constructs the communication link between the autonomous driving vehicle and the cloud in response to a trigger operation of the passenger of the autonomous driving vehicle.

For example, when the passenger of the autonomous driving vehicle has a sudden illness and requires medical treatment, the passenger of the autonomous driving vehicle may construct the communication link between the autonomous driving vehicle and the cloud by triggering a specific button.

During another specific implementation, in 101, specifically, a trigger instruction sent by the cloud isreceived to construct the communication link between the autonomous driving vehicle and the cloud, the trigger instruction being sent by the cloud in response to the trigger operation of the agent of the cloud.

During this specific implementation, the agent of the cloud may actively perform the trigger operation according to a known emergency, so as to send a trigger instruction to the autonomous driving vehicle. The autonomous driving vehicle may construct the communication link between the autonomous driving vehicle and the cloud according to the received trigger instruction sent by the cloud.

For example, the agent of the cloud may send a trigger instruction to the corresponding autonomous driving vehicle by triggering a specific button when the agent of the cloud knows a need for temporary scheduling adjustment on the autonomous driving vehicle. The autonomous driving vehicle receives the trigger instruction sent by the cloud, and constructs the communication link between the autonomous driving vehicle and the cloud according to the trigger instruction sent by the cloud.

In this implementation, the communication link between the autonomous driving vehicle and the cloud is constructed in response to a trigger operation of the passenger of the autonomous driving vehicle, and the communication link between the autonomous driving vehicle and the cloud may also be constructed by receiving a trigger instruction sent by the cloud in response to a trigger operation of the agent of the cloud. Therefore, the communication link, namely communication channel, between the autonomous driving vehicle and the cloud may be constructed more flexibly and effectively, so as to better guarantee information exchange between the autonomous driving vehicle and the cloud.

Optionally, in one possible implementation of this embodiment, the method for controlling autonomous driving vehicle may further include collecting real-time images inside the autonomous driving vehicle and/or outside the autonomous driving vehicle, and uploading the real-time images to the cloud to allow the agent of the cloud to perform a trigger operation corresponding to the trigger instruction based on the real-time images.

In the implementation, the autonomous driving vehicle may collect the real-time images inside the autonomous driving vehicle and/or outside the autonomous driving vehicle through a vehicle-mounted sensor system, and then upload the collected real-time images to the cloud. In this case, the agent of the cloud may know a real-time situation inside the autonomous driving vehicle and/or outside the autonomous driving vehicle based on the real-time images, and then perform a trigger operation corresponding to the trigger instruction based on the real-time situation.

During a specific implementation, the real-time situation known by the agent of the cloud based on the real-time images may include, but is not limited to, at least one of a passenger behavior state, a passenger expression state and a vehicle device state, which is not particularly limited in this implementation.

During this specific implementation, if the agent of the cloud knows through the real-time images that a passenger in the autonomous driving vehicle suddenly falls to the ground, the agent of the cloud may perform the trigger operation corresponding to the trigger instruction. For example, the agent of the cloud clicks a specific button corresponding to the trigger instruction.

Optionally, in one possible implementation of this embodiment, the method for controlling autonomous driving vehicle may further include collecting real-time images inside the autonomous driving vehicle and/or outside the autonomous driving vehicle, and uploading the real-time images to the cloud to allow the agent of the cloud to perform a trigger operation corresponding to the control information based on the real-time images.

In the implementation, the autonomous driving vehicle uploads the collected real-time images to the cloud. In this case, the agent of the cloud may know a real-time situation inside the autonomous driving vehicle and/or outside the autonomous driving vehicle based on the real-time images, and then perform a trigger operation corresponding to the control information based on the real-time situation.

During a specific implementation, the real-time situation known by the agent of the cloud based on the real-time images may include, but is not limited to, at least one of a passenger behavior state, a passenger expression state and a vehicle device state, which is not particularly limited in this embodiment.

During this specific implementation, if the agent of the cloud knows through the real-time images that a passenger in the autonomous driving vehicle suddenly falls to the ground, the agent of the cloud may directly perform the trigger operation corresponding to the control information. For example, the agent of the cloud clicks a specific button corresponding to the control information.

In the implementation, the collected real-time images inside the autonomous driving vehicle and/or outside the autonomous driving vehicle may be uploaded to the cloud, so that the agent of the cloud may know a real-time situation inside the autonomous driving vehicle and/or outside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

Optionally, in one possible implementation of this embodiment, on the basis of controlling the driving of the autonomous driving vehicle according to the foregoing implementation, the collected real-time images inside the autonomous driving vehicle and/or outside the autonomous driving vehicle may be further uploaded to the cloud to allow the agent of the cloud to perform a trigger operation corresponding to the trigger instruction or perform a trigger operation corresponding to the control information based on the real-time images. A detailed description may be obtained with reference to the related content in the foregoing implementation, which is not described in detail herein.

Optionally, in one possible implementation of this embodiment, in 104, specifically, traffic environment information of the autonomous driving vehicle may be acquired, and then the driving of the autonomous driving vehicle may be controlled according to the traffic environment information of the autonomous driving vehicle and the control information of the autonomous driving vehicle.

In the implementation, the traffic environment information of the autonomous driving vehicle may be acquired through a vehicle-mounted sensor system of the autonomous driving vehicle.

In the implementation, alternatively, in addition to the fact that the traffic environment information of the autonomous driving vehicle may be acquired through a vehicle-mounted sensor system of the autonomous driving vehicle, to-be-recognized traffic environment information of the autonomous driving vehicle may be first acquired through the vehicle-mounted sensor system of the autonomous driving vehicle, and then the to-be-recognized traffic environment information of the autonomous driving vehicle is recognized through an environment sensing system of the autonomous driving vehicle, to obtain the traffic environment information of the autonomous driving vehicle.

During a specific implementation, the environment sensing system of the autonomous driving vehicle may recognize the to-be-recognized traffic environment information of the autonomous driving vehicle by using a preset environment information recognition model. The environment information recognition model may include, but is not limited to, a linear regression model, a nonlinear regression model, and a deep learning network, which is not particularly limited in this embodiment.

In the implementation, the acquired traffic environment information of the autonomous driving vehicle may include, but is not limited to, at least one of road environment information, map information, obstacle information, in-vehicle environment information and driving information of the vehicle, which is not particularly limited in this embodiment.

In the implementation, the control information of the autonomous driving vehicle may be sent by the cloud in response to a trigger operation of an agent of the cloud based on the emergency information. The emergency information may include, but is not limited to, at least one of a passenger emergency of the autonomous driving vehicle and a driving emergency of the autonomous driving vehicle, which is not particularly limited in this embodiment.

In the implementation, specifically, a current driving environment and a current driving state of the autonomous driving vehicle may be obtained according to the traffic environment information of the autonomous driving vehicle, a control policy is determined in combination with the control information of the autonomous driving vehicle, and then the driving of the autonomous driving vehicle is controlled according to the control policy. The control policy may include, but is not limited to, at least one of delayed execution and immediate execution.

During a specific implementation, when the control information of the autonomous driving vehicle sent by the cloud received by the autonomous driving vehicle is Pull over, it may be known according to the acquired traffic environment information of the autonomous driving vehicle that the autonomous driving vehicle is currently about to pass an intersection. Therefore, the autonomous driving vehicle is controlled to pull over in a delayed manner, and select a non-intersection non-blocking traffic section to pull over.

In the implementation, the driving of the autonomous driving vehicle may be jointly controlled according to the traffic environment information of the autonomous driving vehicle and the control information of the autonomous driving vehicle, so that the autonomous driving vehicle may be more accurately and effectively controlled to deal with emergencies in combination with driving environments of the autonomous driving vehicle, which improves the autonomous driving vehicle's capability to deal with the emergencies, thereby ensuring the safety and reliability of the driving of the autonomous driving vehicle.

In one implementation of this embodiment, the step 104 may be performed after the control information of the autonomous driving vehicle fed back by the cloud is received according to the foregoing implementations. A detailed description may be obtained with reference to the related content in the foregoing implementation, which is not described in detail herein.

In this embodiment, a communication link between an autonomous driving vehicle and a cloud is constructed, and then emergency information provided by a passenger of the autonomous driving vehicle is reported to the cloud based on the communication link, so that control information of the autonomous driving vehicle fed back by the cloud in response to a trigger operation of an agent of the cloud based on the emergency information can be received, and the driving of the autonomous driving vehicle can be controlled according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and remote intervention in the autonomous driving vehicle, so that the autonomous driving vehicle can have the capability to better deal with the emergencies, thereby ensuring the safety and reliability of the driving of the autonomous driving vehicle.

In this embodiment, the communication link between the autonomous driving vehicle and the cloud is constructed in response to a trigger operation of the passenger of the autonomous driving vehicle, and the communication link between the autonomous driving vehicle and the cloud may also be constructed by receiving a trigger instruction sent by the cloud in response to a trigger operation of the agent of the cloud. Therefore, the communication link, namely communication channel, between the autonomous driving vehicle and the cloud may be constructed more flexibly and effectively, so as to better guarantee information exchange between the autonomous driving vehicle and the cloud.

In this embodiment, the collected real-time images inside the autonomous driving vehicle and/or outside the autonomous driving vehicle may be uploaded to the cloud, so that the agent of the cloud may know a real-time situation inside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

In this embodiment, the driving of the autonomous driving vehicle may be jointly controlled according to the traffic environment information of the autonomous driving vehicle and the control information of the autonomous driving vehicle, so that the autonomous driving vehicle may be more accurately and effectively controlled to deal with emergencies in combination with driving environments of the autonomous driving vehicle, which improves the autonomous driving vehicle's capability to deal with the emergencies, thereby ensuring the safety and reliability of the driving of the autonomous driving vehicle.

In addition, by use of the technical solution according to this embodiment, there is no need to deploy safety personnel in each autonomous driving vehicle, thereby saving costs.

In addition, by use of the technical solution according to this embodiment, user experience can be effectively improved.

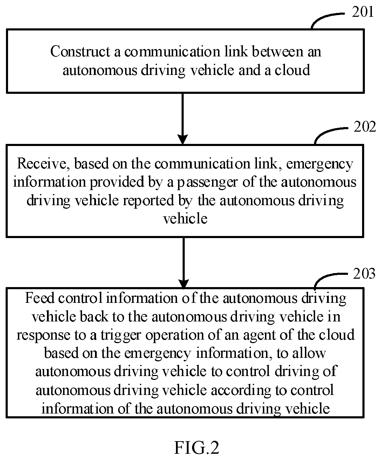

FIG. 2 is a schematic diagram according to a second embodiment of the present disclosure which is no longer covered by the claims, as shown in FIG. 2.

In 201, a communication link between an autonomous driving vehicle and a cloud is constructed.

In 202, emergency information provided by a passenger of the autonomous driving vehicle reported by the autonomous driving vehicle is received based on the communication link.

In 203, control information of the autonomous driving vehicle is fed back to the autonomous driving vehicle in response to a trigger operation of an agent of the cloud based on the emergency information, to allow the autonomous driving vehicle to control the driving of the autonomous driving vehicle according to the control information of the autonomous driving vehicle.

It is to be noted that steps 201 to 203 may be partially or wholly performed by a processing engine in a server located on a network side, or a distributed system located on the network side, such as a processing engine or a distributed system in an autonomous driving processing platform on the network side, which is not particularly limited in this embodiment.

In this way, a communication link between an autonomous driving vehicle and a cloud is constructed, and then emergency information provided by a passenger of the autonomous driving vehicle reported by the autonomous driving vehicle is received based on the communication link, so that control information of the autonomous driving vehicle can be fed back to the autonomous driving vehicle in response to a trigger operation of an agent of the cloud based on the emergency information, to allow the autonomous driving vehicle to control the driving of the autonomous driving vehicle according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and intervention in the autonomous driving vehicle, so that the autonomous driving vehicle can have the capability to better deal with the emergencies, thereby ensuring the safety and reliability of the driving of the autonomous driving vehicle.

Optionally, in one possible implementation of this embodiment, in 201, the communication link between the autonomous driving vehicle and the cloud may be constructed in different triggering manners.

During a specific implementation, in 201, the communication link between the autonomous driving vehicle and the cloud may be specifically constructed in response to a trigger operation of the agent of the cloud.

During this specific implementation, the agent of the cloud may actively perform the trigger operation according to a known emergency to construct the communication link between the autonomous driving vehicle and the cloud.

For example, the agent of the cloud may construct the communication link between the autonomous driving vehicle and the cloud by triggering a specific button when the agent of the cloud knows a need for temporary scheduling adjustment on the autonomous driving vehicle.

During another specific implementation, in 201, specifically, a trigger instruction sent by the autonomous driving vehicle may be received to construct the communication link between the autonomous driving vehicle and the cloud, the trigger instruction being sent by the autonomous driving vehicle in response to the trigger operation of the passenger of the autonomous driving vehicle.

During this specific implementation, in the case of a sudden personal need of the passenger of the autonomous driving vehicle, the passenger of the autonomous driving vehicle may actively perform a trigger operation to send a trigger instruction to the cloud, and the cloud may construct a communication link between the autonomous driving vehicle and the cloud according to the received trigger instruction sent by the autonomous driving vehicle.

For example, when the passenger of the autonomous driving vehicle has a sudden illness and requires medical treatment, the passenger of the autonomous driving vehicle may send a trigger instruction to the cloud by triggering a specific button. The cloud receives the trigger instruction sent by the autonomous driving vehicle, and constructs a communication link between the autonomous driving vehicle and the cloud.

In the implementation, the communication link between the autonomous driving vehicle and the cloud may be constructed in response to a trigger operation of the agent of the cloud, and the communication link between the autonomous driving vehicle and the cloud may also be constructed by receiving a trigger instruction sent by the autonomous driving vehicle in response to a trigger operation of the passenger of the autonomous driving vehicle. Therefore, the communication link, namely communication channel, between the autonomous driving vehicle and the cloud may be constructed more flexibly and effectively, so as to better guarantee information exchange between the autonomous driving vehicle and the cloud.

Optionally, in one possible implementation of this embodiment, the method for controlling autonomous driving vehicle may further include receiving real-time images inside the autonomous driving vehicle and/or outside the autonomous driving vehicle uploaded by the autonomous driving vehicle, to allow the agent of the cloud to perform a trigger operation corresponding to the trigger instruction based on the real-time images.

In the implementation, by receiving the real-time images inside the autonomous driving vehicle and/or outside the autonomous driving vehicle uploaded by the autonomous driving vehicle, the agent of the cloud may know a real-time situation inside the autonomous driving vehicle and/or outside the autonomous driving vehicle, and may perform the trigger operation corresponding to the trigger instruction based on the real-time situation.

During a specific implementation, the real-time situation known by the agent of the cloud based on the real-time images may include, but is not limited to, at least one of a passenger behavior state, a passenger expression state and a vehicle device state, which is not particularly limited in this embodiment.

During this specific implementation, if the agent of the cloud knows through the real-time images that a passenger in the autonomous driving vehicle suddenly falls to the ground, the agent of the cloud may perform the trigger operation corresponding to the trigger instruction. For example, the agent of the cloud clicks a specific button corresponding to the trigger instruction.

Optionally, in one possible implementation of this embodiment, the method for controlling autonomous driving vehicle may further include receiving real-time images inside the autonomous driving vehicle and/or outside the autonomous driving vehicle uploaded by the autonomous driving vehicle, to allow the agent of the cloud to perform a trigger operation corresponding to the control information based on the real-time images.

In the implementation, by receiving the real-time images inside the autonomous driving vehicle and/or outside the autonomous driving vehicle uploaded by the autonomous driving vehicle, the agent of the cloud may know a real-time situation inside the autonomous driving vehicle and/or outside the autonomous driving vehicle, and then perform the trigger operation corresponding to the control information based on the real-time situation.

During a specific implementation, the real-time situation known by the agent of the cloud based on the real-time images may include, but is not limited to, at least one of a passenger behavior state, a passenger expression state and a vehicle device state, which is not particularly limited in this implementation.

During this specific implementation, if the agent of the cloud knows through the real-time images that a passenger in the autonomous driving vehicle suddenly falls to the ground, the agent of the cloud may perform the trigger operation corresponding to the control information. For example, the agent of the cloud clicks a specific button corresponding to the control information.

In the implementation, the real-time images inside the autonomous driving vehicle and/or outside the autonomous driving vehicle uploaded by the autonomous driving vehicle may be received, so that the agent of the cloud may know a real-time situation inside the autonomous driving vehicle and/or outside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

Optionally, in one possible implementation of this embodiment, on the basis of controlling the driving of the autonomous driving vehicle according to the foregoing implementation, the real-time images inside the autonomous driving vehicle and/or outside the autonomous driving vehicle uploaded by the autonomous driving vehicle may be further received to allow the agent of the cloud to perform a trigger operation corresponding to the trigger instruction or perform a trigger operation corresponding to the control information based on the real-time images. A detailed description may be obtained with reference to the related content in the foregoing implementation, which is not described in detail herein.

In this embodiment, a communication link between an autonomous driving vehicle and a cloud is constructed, and then emergency information provided by a passenger of the autonomous driving vehicle reported by the autonomous driving vehicle may be received based on the communication link, so that control information of the autonomous driving vehicle can be fed back to the autonomous driving vehicle in response to a trigger operation of an agent of the cloud based on the emergency information, to allow the autonomous driving vehicle to control the driving of the autonomous driving vehicle according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and intervention in the autonomous driving vehicle, so that the autonomous driving vehicle can have the capability to better deal with the emergencies, thereby ensuring the safety and reliability of the driving of the autonomous driving vehicle.

In this embodiment, the communication link between the autonomous driving vehicle and the cloud may be constructed in response to a trigger operation of the agent of the cloud, and the communication link between the autonomous driving vehicle and the cloud may also be constructed by receiving a trigger instruction sent by the autonomous driving vehicle in response to a trigger operation of the passenger of the autonomous driving vehicle. Therefore, the communication link, namely communication channel, between the autonomous driving vehicle and the cloud may be constructed more flexibly and effectively, so as to better guarantee information exchange between the autonomous driving vehicle and the cloud.

In this embodiment, the real-time images inside the autonomous driving vehicle and/or outside the autonomous driving vehicle uploaded by the autonomous driving vehicle may be received, so that the agent of the cloud may know a real-time situation inside the autonomous driving vehicle and/or outside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

In addition, by use of the technical solution according to this embodiment, there is no need to deploy safety personnel in each autonomous driving vehicle, thereby saving costs.

In addition, by use of the technical solution according to this embodiment, user experience can be effectively improved.

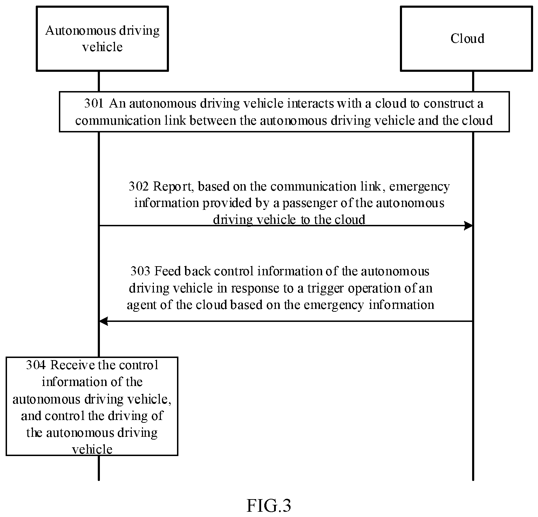

FIG. 3 is a schematic diagram according to a third embodiment of the present disclosure, as shown in FIG. 3.

In 301, an autonomous driving vehicle interacts with a cloud to construct a communication link between the autonomous driving vehicle and the cloud.

It is to be noted that the steps 301 to 304 in this embodiment may represent a process of controlling the autonomous driving vehicle to deal with emergencies during actual operation of the autonomous driving vehicle through interaction between the autonomous driving vehicle and the cloud.

In 301, the communication link between the autonomous driving vehicle and the cloud may be constructed in different triggering manners.

During one specific implementation of this embodiment, in 301, the communication link between the autonomous driving vehicle and the cloud is specifically constructed by the autonomous driving vehicle based on a trigger operation of the passenger of the autonomous driving vehicle.

For example, the passenger of the autonomous driving vehicle can trigger the construction of the communication link between the autonomous driving vehicle and the cloud by triggering a specific button of the autonomous driving vehicle.

During another specific implementation which is not claimed of this embodiment, in 301, the communication link between the autonomous driving vehicle and the cloud may be specifically constructed by the cloud based on a trigger operation of the agent of the cloud.

For example, the agent of the cloud can trigger the construction of the communication link between the autonomous driving vehicle and the cloud by triggering a specific button in the cloud.

In 302, the autonomous driving vehicle reports, based on the communication link, emergency information provided by a passenger of the autonomous driving vehicle to the cloud.

Optionally, in this embodiment, the cloud may receive, based on the communication link, emergency information provided by a passenger of the autonomous driving vehicle reported by the autonomous driving vehicle.

Specifically, after 301 is performed to construct the communication link between the autonomous driving vehicle and the cloud, the agent of the cloud makes a voice call with the passenger of the autonomous driving vehicle based on the communication link, and the autonomous driving vehicle may report emergency information provided by the passenger of the autonomous driving vehicle to the cloud, to enable the cloud to obtain the emergency information.

Specifically, the emergency information may include, but is not limited to, at least one of a passenger emergency of the autonomous driving vehicle and a driving emergency of the autonomous driving vehicle, which is not particularly limited in this embodiment.

Alternatively, in addition to the fact that the agent of the cloud may make a voice call with the passenger of the autonomous driving vehicle, the agent of the cloud may also make a video call with the passenger of the autonomous driving vehicle.

In 303, the cloud feeds control information of the autonomous driving vehicle back to the autonomous driving vehicle in response to a trigger operation of an agent of the cloud based on the emergency information.

Optionally, in this embodiment, after knowing the emergency information, the agent of the cloud may perform a trigger operation corresponding to the control information, to enable the cloud to feed the control information of the autonomous driving vehicle back to the autonomous driving vehicle.

In 304, the autonomous driving vehicle receives the control information of the autonomous driving vehicle, and controls the driving of the autonomous driving vehicle.

In this embodiment, firstly, after the autonomous driving vehicle receives the control information of the autonomous driving vehicle, it is first checked according to the control information of the autonomous driving vehicle whether the agent of the cloud is a registered legitimate operator of the autonomous driving vehicle.

Then, the autonomous driving vehicle acquires traffic environment information of the autonomous driving vehicle.

Specifically, the traffic environment information of the autonomous driving vehicle includes, but is not limited to, road environment information, map information, obstacle information, in-vehicle environment information and driving information of the vehicle.

The road environment information may include, but is not limited to, at least one of lane information and curb information.

The map information may include, but is not limited to, at least one of geographic locations and navigation information.

The obstacle information may include, but is not limited to, at least one of motor vehicles, non-motor vehicles, pedestrians, road safety warning facilities, and other entities.

The in-vehicle environment information may include, but is not limited to, at least one of in-vehicle air quality, in-vehicle temperature information and in-vehicle ambient sound information.

The driving information of the vehicle may include, but is not limited to, at least one of a current driving speed, steering, gear, endurance, braking, light, and a hardware and software system state of the vehicle.

It may be understood that the traffic environment information of the autonomous driving vehicle is not particularly limited in this embodiment.

Further, the autonomous driving vehicle may know various traffic environment conditions inside and outside the vehicle through the acquired traffic environment information of the autonomous driving vehicle. For example, through the traffic environment information of the autonomous driving vehicle, the autonomous driving vehicle may know whether the road is a road with coexistence of pedestrians and vehicles, a degree of congestion of the road, whether there are to-be-avoided obstacles in front of the road, whether there is water on the road surface, abnormal weather outside the vehicle, abnormal behaviors of passengers, and other conditions.

During one specific implementation of this embodiment, the traffic environment information of the autonomous driving vehicle may be acquired through a vehicle-mounted sensor system of the autonomous driving vehicle.

During another specific implementation of this embodiment, to-be-recognized traffic environment information of the autonomous driving vehicle may be first acquired through the vehicle-mounted sensor system of the autonomous driving vehicle, and then the to-be-recognized traffic environment information of the autonomous driving vehicle is recognized through an environment sensing system of the autonomous driving vehicle, to obtain the traffic environment information of the autonomous driving vehicle.

During this specific implementation, the environment sensing system of the autonomous driving vehicle may recognize the to-be-recognized traffic environment information of the autonomous driving vehicle by using a preset environment information recognition model, so that more accurate and effective traffic environment information of the autonomous driving vehicle can be obtained.

During yet another specific implementation of this embodiment, the autonomous driving vehicle may also acquire traffic environment information provided by a communication network. For example, the traffic environment information of the autonomous driving vehicle may be acquired from Internet of Vehicles.

Finally, specifically, a current driving environment and a current driving state of the autonomous driving vehicle may be obtained according to the traffic environment information of the autonomous driving vehicle, a control policy is determined in combination with the control information of the autonomous driving vehicle, and then the driving of the autonomous driving vehicle is controlled according to the control policy. The control policy may include, but is not limited to, at least one of delayed execution and immediate execution.

During one specific implementation of this embodiment, when the control information of the autonomous driving vehicle received by the autonomous driving vehicle is Pull over, the autonomous driving vehicle acquires traffic environment information of the autonomous driving vehicle, and determines according to the acquired traffic environment information of the autonomous driving vehicle that the autonomous driving vehicle is currently about to pass an intersection. Therefore, the autonomous driving vehicle is controlled to pull over in a delayed manner, and select a non-intersection non-blocking traffic section to pull over.

During another specific implementation of this embodiment, when the control information of the autonomous driving vehicle received by the autonomous driving vehicle is Adjust a speed limit of the vehicle, for example, to 95 km/h, the autonomous driving vehicle may acquire traffic environment information of the autonomous driving vehicle, determines, according to the acquired traffic environment information of the autonomous driving vehicle, a speed limit threshold of a lane on which the autonomous driving vehicle is currently driving, and judges whether the speed limit of the vehicle meets the speed limit threshold of the lane on which the autonomous driving vehicle is currently driving. If yes, the speed limit of the vehicle of the autonomous driving vehicle may be directly adjusted to 95 km/h. If no, the speed limit of the vehicle of the autonomous driving vehicle may be adjusted to 95 km/h, and the lane on which the autonomous driving vehicle is driving is adjusted according to the speed limit of the vehicle.

During yet another specific implementation of this embodiment, after the autonomous driving vehicle pulls over, the autonomous driving vehicle may report image information and traffic environment information collected by the sensor system to the cloud. The cloud may update a driving route of the autonomous driving vehicle according to the received image information and traffic environment information, and send the updated driving route of the autonomous driving vehicle to the autonomous driving vehicle. The autonomous driving vehicle saves the received updated driving route of the autonomous driving vehicle, and controls the driving of the autonomous driving vehicle according to the updated driving route of the autonomous driving vehicle.

In this embodiment, a communication channel between the passenger of the autonomous driving vehicle and the agent of the cloud is constructed by constructing the communication link between the autonomous driving vehicle and the cloud, and the autonomous driving vehicle reports the emergency information by using the constructed communication link between the autonomous driving vehicle and the cloud, so that the agent of the cloud can accurately know emergencies of the autonomous driving vehicle, so as to trigger the cloud to control the driving of the autonomous driving vehicle, which can accurately and effectively realize remote control and intervention in the autonomous driving vehicle, and the autonomous driving vehicle can have the capability to better deal with the emergencies, thereby ensuring the safety and reliability of the driving of the autonomous driving vehicle.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. Further, those skilled in the art should also appreciate that all the embodiments described in the specification are preferred embodiments, and the related actions and modules are not necessarily mandatory to the present disclosure.

In the above embodiments, the descriptions of the embodiments have respective focuses. For a part that is not described in detail in one embodiment, refer to related descriptions in other embodiments.

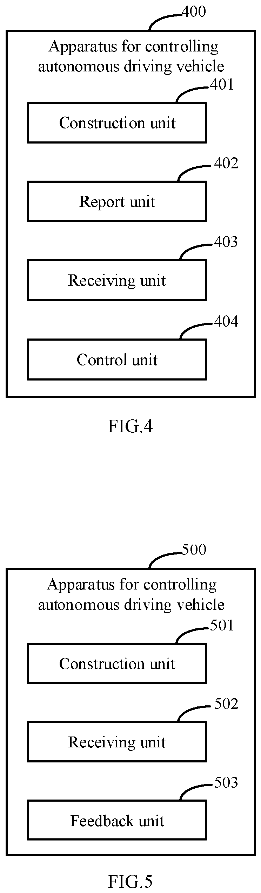

FIG. 4 is a schematic diagram according to a fourth embodiment of the present disclosure, as shown in FIG. 4. An apparatus 400 for controlling autonomous driving vehicle in this embodiment includes a construction unit 401, a report unit 402, a receiving unit 403 and a control unit 404. The construction unit 401 is configured to construct a communication link between an autonomous driving vehicle and a cloud. The report unit 402 is configured to report, based on the communication link, emergency information provided by a passenger of the autonomous driving vehicle to the cloud. The receiving unit 403 is configured to receive control information of the autonomous driving vehicle fed back by the cloud, the control information of the autonomous driving vehicle being sent by the cloud in response to a trigger operation of an agent of the cloud based on the emergency information. The control unit 404 is configured to control the driving of the autonomous driving vehicle according to the control information of the autonomous driving vehicle.

It is to be noted that the apparatus for controlling autonomous driving vehicle in this embodiment may be partially or wholly an APP located in a local terminal, or a functional unit arranged in an APP located in a local terminal such as a plug-in or an SDK, which is not particularly limited in this embodiment.

It may be understood that the APP may be a nativeApp installed on a local terminal, or a webApp of a browser on a local terminal, which is not limited in this embodiment.

In one implementation of this embodiment, the construction unit 401 may be specifically configured to construct the communication link between the autonomous driving vehicle and the cloud in response to a trigger operation of the passenger of the autonomous driving vehicle.

Optionally, in one possible implementation, which is not claimed. of this embodiment, the construction unit 401 may be further specifically configured to receive a trigger instruction sent by the cloud to construct the communication link between the autonomous driving vehicle and the cloud, the trigger instruction being sent by the cloud in response to the trigger operation of the agent of the cloud.

Optionally, in one possible implementation of this embodiment, the report unit 402 may be further configured to: collect real-time images inside the autonomous driving vehicle and/or outside the autonomous driving vehicle; and upload the real-time images to the cloud to allow the agent of the cloud to perform a trigger operation corresponding to the trigger instruction or perform a trigger operation corresponding to the control information based on the real-time images.

In one implementation of this embodiment, the control unit 404 is specifically configured to: acquire traffic environment information of the autonomous driving vehicle; and control the driving of the autonomous driving vehicle according to the traffic environment information of the autonomous driving vehicle and the control information of the autonomous driving vehicle.

In this embodiment, the construction unit constructs a communication link between an autonomous driving vehicle and a cloud, and then the report unit reports, based on the communication link, emergency information provided by a passenger of the autonomous driving vehicle to the cloud, so that the receiving unit can receive control information of the autonomous driving vehicle fed back by the cloud in response to a trigger operation of an agent of the cloud based on the emergency information, and the control unit can control the driving of the autonomous driving vehicle according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and remote intervention in the autonomous driving vehicle, so that the autonomous driving vehicle can have the capability to better deal with the emergencies, thereby ensuring the safety and reliability of the driving of the autonomous driving vehicle.

In this embodiment, the communication link between the autonomous driving vehicle and the cloud may be constructed in response to a trigger operation of the passenger of the autonomous driving vehicle, and the communication link between the autonomous driving vehicle and the cloud may also be constructed by receiving a trigger instruction sent by the cloud in response to a trigger operation of the agent of the cloud. Therefore, the communication link, namely communication channel, between the autonomous driving vehicle and the cloud may be constructed more flexibly and effectively, so as to better guarantee information exchange between the autonomous driving vehicle and the cloud.

In this embodiment, the collected real-time images inside the autonomous driving vehicle and/or outside the autonomous driving vehicle may be uploaded to the cloud, so that the agent of the cloud may know a real-time situation inside the autonomous driving vehicle and/or outside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

In this embodiment, the driving of the autonomous driving vehicle may be jointly controlled according to the traffic environment information of the autonomous driving vehicle and the control information of the autonomous driving vehicle, so that the autonomous driving vehicle may be more accurately and effectively controlled to deal with emergencies in combination with driving environments of the autonomous driving vehicle, which improves the autonomous driving vehicle's capability to deal with the emergencies, thereby ensuring the safety and reliability of the driving of the autonomous driving vehicle.

In addition, by use of the technical solution according to this embodiment, there is no need to deploy safety personnel in each autonomous driving vehicle, thereby saving costs.

In addition, by use of the technical solution according to this embodiment, user experience can be effectively improved.

FIG. 5 is a schematic diagram according to a fifth embodiment of the present disclosure, which is no longer covered by the claims, as shown in FIG. 5. An apparatus 500 for controlling autonomous driving vehicle in this embodiment may include a construction unit 501, a receiving unit 502 and a feedback unit 503. The construction unit 501 is configured to construct a communication link between an autonomous driving vehicle and a cloud. The receiving unit 502 is configured to receive, based on the communication link, emergency information provided by a passenger of the autonomous driving vehicle reported by the autonomous driving vehicle. The feedback unit 503 is configured to feed control information of the autonomous driving vehicle back to the autonomous driving vehicle in response to a trigger operation of an agent of the cloud based on the emergency information, to allow the autonomous driving vehicle to control the driving of the autonomous driving vehicle according to the control information of the autonomous driving vehicle.

It is to be noted that the apparatus for controlling autonomous driving vehicle in this embodiment may be partially or wholly a processing engine in a server located on a network side, or a distributed system located on the network side, such as a processing engine or a distributed system in an autonomous driving processing platform on the network side, which is not particularly limited in this embodiment.

Optionally, in one possible implementation of this embodiment, the construction unit 501 may be specifically configured to construct the communication link between the autonomous driving vehicle and the cloud in response to a trigger operation of the agent of the cloud.

Optionally, in another possible implementation of this embodiment, the construction unit 501 may be further specifically configured to receive a trigger instruction sent by the autonomous driving vehicle to construct the communication link between the autonomous driving vehicle and the cloud, the trigger instruction being sent by the autonomous driving vehicle in response to the trigger operation of the passenger of the autonomous driving vehicle.

Optionally, in one possible implementation of this embodiment, the receiving unit 502 may be further configured to: receive real-time images inside the autonomous driving vehicle and/or outside the autonomous driving vehicle uploaded by the autonomous driving vehicle, to allow the agent of the cloud to perform a trigger operation corresponding to the trigger instruction or perform a trigger operation corresponding to the control information based on the real-time images.

In this embodiment, the construction unit constructs a communication link between an autonomous driving vehicle and a cloud, and then the receiving unit may receive, based on the communication link, emergency information provided by a passenger of the autonomous driving vehicle reported by the autonomous driving vehicle, so that the feedback unit can feed control information of the autonomous driving vehicle back to the autonomous driving vehicle in response to a trigger operation of an agent of the cloud based on the emergency information, to allow the autonomous driving vehicle to control the driving of the autonomous driving vehicle according to the control information of the autonomous driving vehicle. Since the autonomous driving vehicle reports the emergency information by using the constructed communication link between the autonomous driving vehicle and the cloud, the agent of the cloud can accurately know emergencies of the autonomous driving vehicle, so as to trigger the cloud to control the driving of the autonomous driving vehicle, which can accurately and effectively realize remote control and intervention in the autonomous driving vehicle, so that the autonomous driving vehicle can have the capability to better deal with the emergencies, thereby ensuring the safety and reliability of the driving of the autonomous driving vehicle.

In this embodiment, the communication link between the autonomous driving vehicle and the cloud may be constructed in response to a trigger operation of the agent of the cloud, and the communication link between the autonomous driving vehicle and the cloud may also be constructed by receiving a trigger instruction sent by the autonomous driving vehicle in response to a trigger operation of the passenger of the autonomous driving vehicle. Therefore, the communication link, namely communication channel, between the autonomous driving vehicle and the cloud may be constructed more flexibly and effectively, so as to better guarantee information exchange between the autonomous driving vehicle and the cloud.

In this embodiment, the real-time images inside the autonomous driving vehicle and/or outside the autonomous driving vehicle uploaded by the autonomous driving vehicle may be received, so that the agent of the cloud may know a real-time situation inside the autonomous driving vehicle and/or outside the autonomous driving vehicle, which makes it easy for the agent of the cloud to find an emergency inside the autonomous driving vehicle and/or outside the autonomous driving vehicle in a more timely manner and perform a corresponding coping operation to trigger the cloud to control the driving of the autonomous driving vehicle, and further improves the autonomous driving vehicle's capability to deal with emergencies, thereby ensuring the safety and reliability of the driving of the autonomous driving vehicle.

In addition, by use of the technical solution according to this embodiment, there is no need to deploy safety personnel in each autonomous driving vehicle, thereby saving costs.

In addition, by use of the technical solution according to this embodiment, user experience can be effectively improved.

Acquisition, storage and application of users' personal information involved in the technical solutions of the present disclosure, such as passenger behavior information and passenger image information, comply with relevant laws and regulations, and do not violate public order and moral.

According to embodiments of the present disclosure, the present disclosure further provides an electronic device, a readable storage medium and a computer program product, and further provides an autonomous driving vehicle including the electronic device.

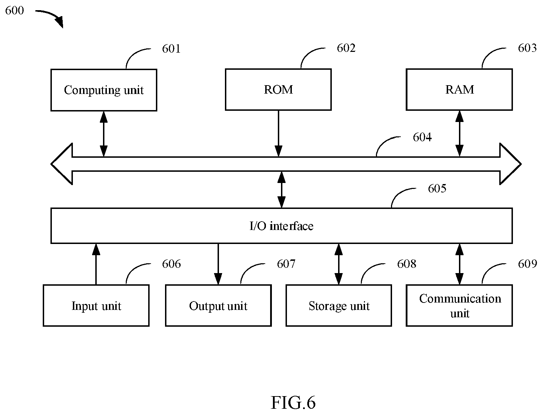

FIG. 6 is a schematic block diagram of an exemplary electronic device 600 configured to implement embodiments of the present disclosure, which is not claimed. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the electronic device 600 includes a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the electronic device 600. The computing unit 601, the ROM 602 and the RAM 603 are connected to one another by a bus 604. An input/output (I/O) interface 605 may also be connected to the bus 604.

A plurality of components in the electronic device 600 are connected to the I/O interface 605, including an input unit 606, such as a keyboard and a mouse; an output unit 607, such as various displays and speakers; a storage unit 608, such as disks and discs; and a communication unit 609, such as a network card, a modem and a wireless communication transceiver. The communication unit 609 allows the electronic device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 601 performs the methods and processing described above, such as the method for controlling autonomous driving vehicle. For example, in some embodiments, the a method for controlling autonomous driving vehicle may be implemented as a computer software program that is tangibly embodied in a machine-readable medium, such as the storage unit 608. In some embodiments, part or all of a computer program may be loaded and/or installed on the electronic device 600 via the ROM 602 and/or the communication unit 609. One or more steps of the method for controlling autonomous driving vehicle described above may be performed when the computer program is loaded into the RAM 603 and executed by the computing unit 601. Alternatively, in other embodiments, the computing unit 601 may be configured to perform the method for controlling autonomous driving vehicle by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the method in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation schema of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

## Claims

1. A method for controlling autonomous driving vehicle, comprising, by an apparatus comprised in the autonomous driving vehicle:
constructing (101) a communication link between an autonomous driving vehicle and a cloud;
reporting (102), based on the communication link, emergency information provided by a passenger of the autonomous driving vehicle to the cloud;
receiving (103) control information of the autonomous driving vehicle fed back by the cloud, the control information of the autonomous driving vehicle being sent by the cloud in response to a trigger operation of an agent of the cloud based on the emergency information; and
controlling (104) the driving of the autonomous driving vehicle according to the control information of the autonomous driving vehicle,
wherein the constructing a communication link between an autonomous driving vehicle and a cloud comprises:
constructing the communication link between the autonomous driving vehicle and the cloud in response to a trigger operation of the passenger of the autonomous driving vehicle;
the controlling the driving of the autonomous driving vehicle according to the control information of the autonomous driving vehicle comprises:
checking, according to the control information of the autonomous driving vehicle, whether the agent of the cloud is a registered legitimate operator of the autonomous driving vehicle; and controlling the driving of the autonomous driving vehicle if the agent of the cloud is a registered legitimate operator of the autonomous driving vehicle, and
acquiring traffic environment information of the autonomous driving vehicle, the traffic environment information of the autonomous driving vehicle comprising at least one of road environment information, map information, obstacle information, in-vehicle environment information and driving information of the vehicle; and controlling the driving of the autonomous driving vehicle according to the traffic environment information of the autonomous driving vehicle and the control information of the autonomous driving vehicle.

2. The method according to claim 1, wherein the method further comprises:
collecting real-time images inside the autonomous driving vehicle and/or outside the autonomous driving vehicle; and
uploading the real-time images to the cloud to allow the agent of the cloud to perform a trigger operation corresponding to the trigger instruction or perform a trigger operation corresponding to the control information based on the real-time images.

3. An apparatus (400) for controlling autonomous driving vehicle, comprising:
a construction unit (401) configured to construct a communication link between an autonomous driving vehicle and a cloud;
a report unit (402) configured to report, based on the communication link, emergency information provided by a passenger of the autonomous driving vehicle to the cloud;
a receiving unit (403) configured to receive control information of the autonomous driving vehicle fed back by the cloud, the control information of the autonomous driving vehicle being sent by the cloud in response to a trigger operation of an agent of the cloud based on the emergency information; and
a control unit (404) configured to control the driving of the autonomous driving vehicle according to the control information of the autonomous driving vehicle,
wherein the construction unit (401) is specifically configured to construct the communication link between the autonomous driving vehicle and the cloud in response to a trigger operation of the passenger of the autonomous driving vehicle, and
the control unit (404) is further configured to check, according to the control information of the autonomous driving vehicle, whether the agent of the cloud is a registered legitimate operator of the autonomous driving vehicle; and control the driving of the autonomous driving vehicle if the agent of the cloud is a registered legitimate operator of the autonomous driving vehicle; and the control unit (404) is further configured to acquire traffic environment information of the autonomous driving vehicle, the traffic environment information of the autonomous driving vehicle comprising at least one of road environment information, map information, obstacle information, in-vehicle environment information and driving information of the vehicle; and control the driving of the autonomous driving vehicle according to the traffic environment information of the autonomous driving vehicle and the control information of the autonomous driving vehicle.

4. The apparatus (400) according to claim 3, wherein the report unit (402) is further configured to:
collect real-time images inside the autonomous driving vehicle and/or outside the autonomous driving vehicle; and
upload the real-time images to the cloud to allow the agent of the cloud to perform a trigger operation corresponding to the trigger instruction or perform a trigger operation corresponding to the control information based on the real-time images.

5. A non-transitory computer-readable storage medium storing computer instructions which, when executed by a computer, cause the computer to perform the method according to any one of claims 1 to 2.

6. A computer program product, comprising a computer program, wherein, when the computer program is executed by a processor, the method according to any one of claims 1 to 2 is performed.

7. An autonomous driving vehicle, comprising the apparatus for controlling autonomous driving vehicle according to claim 3.

## Patentansprüche

1. Verfahren zur Steuerung eines autonom fahrenden Fahrzeugs, das die folgenden Schritte umfasst, die von einer in dem autonom fahrenden Fahrzeug enthaltenen Vorrichtung ausgeführt werden:
Herstellen (101) einer Kommunikationsverbindung zwischen einem autonom fahrenden Fahrzeug und einer Cloud;
Melden (102), auf der Grundlage der Kommunikationsverbindung, von Notfallinformationen, die von einem Insassen des autonom fahrenden Fahrzeugs bereitgestellt werden, an die Cloud;
Empfangen (103) von Steuerinformationen des autonom fahrenden Fahrzeugs, die von der Cloud zurückgegeben werden, wobei die Steuerinformationen des autonom fahrenden Fahrzeugs von der Cloud als Reaktion auf einen Auslösevorgang eines Agent der Cloud auf der Grundlage der Notfallinformationen gesendet werden; und
Steuern (104) des autonom fahrenden Fahrzeugs entsprechend den Steuerinformationen des autonom fahrenden Fahrzeugs,
wobei das Herstellen einer Kommunikationsverbindung zwischen einem autonom fahrenden Fahrzeug und einer Cloud umfasst:
Herstellen der Kommunikationsverbindung zwischen dem autonom fahrenden Fahrzeug und der Cloud als Reaktion auf einen Auslösevorgang des Insassen des autonom fahrenden Fahrzeugs;
wobei das Steuern des Fahrens des autonom fahrenden Fahrzeugs entsprechend den Steuerinformationen des autonom fahrenden Fahrzeugs umfasst:
Prüfen, entsprechend den Steuerinformationen des autonom fahrenden Fahrzeugs, ob der Agent der Cloud ein registrierter berechtigter Führer des autonom fahrenden Fahrzeugs ist; und Steuern des Fahrens des autonom fahrenden Fahrzeugs, wenn der Agent der Cloud ein registrierter berechtigter Führer des autonom fahrenden Fahrzeugs ist, und
Erfassen von Verkehrsumgebungsinformationen des autonom fahrenden Fahrzeugs, wobei die Verkehrsumgebungsinformationen des autonom fahrenden Fahrzeugs mindestens eines aus Straßenumgebungsinformationen, Karteninformationen, Hindernisinformationen, In-Vehicle-Umgebungsinformationen und Fahrinformationen des Fahrzeugs umfassen; und
Steuern des Fahrens des autonom fahrenden Fahrzeugs entsprechend den Verkehrsumgebungsinformationen des autonom fahrenden Fahrzeugs und den Steuerinformationen des autonom fahrenden Fahrzeugs.

2. Verfahren nach Anspruch 1, wobei das Verfahren ferner umfasst:
Erfassen von Echtzeitbildern innerhalb des autonom fahrenden Fahrzeugs und/oder außerhalb des autonom fahrenden Fahrzeugs; und
Hochladen der Echtzeitbilder in die Cloud, um dem Agent der Cloud zu ermöglichen, auf der Grundlage der Echtzeitbilder einen Auslösevorgang entsprechend der Auslöseanweisung durchzuführen oder einen Auslösevorgang entsprechend den Steuerinformationen durchzuführen.

3. Vorrichtung (400) zum Steuern eines autonom fahrenden Fahrzeugs, die aufweist:
eine Herstellungseinheit (401), die dazu ausgebildet ist, eine Kommunikationsverbindung zwischen einem autonom fahrenden Fahrzeug und einer Cloud herzustellen;
eine Meldeeinheit (402), die dazu ausgebildet ist, auf der Grundlage der Kommunikationsverbindung Notfallinformationen, die von einem Insassen des autonom fahrenden Fahrzeugs bereitgestellt werden, an die Cloud zu melden;
eine Empfangseinheit (403), die dazu ausgebildet ist, Steuerinformationen des autonom fahrenden Fahrzeugs zu empfangen, die von der Cloud zurückgegeben werden, wobei die Steuerinformationen des autonom fahrenden Fahrzeugs von der Cloud als Reaktion auf einen Auslösevorgang eines Agent der Cloud auf der Grundlage der Notfallinformationen gesendet werden; und
eine Steuereinheit (404), die dazu ausgebildet ist, das Fahren des autonom fahrenden Fahrzeugs entsprechend den Steuerinformationen des autonom fahrenden Fahrzeugs zu steuern,
wobei die Herstellungseinheit (401) insbesondere dazu ausgebildet ist, die Kommunikationsverbindung zwischen dem autonom fahrenden Fahrzeug und der Cloud als Reaktion auf einen Auslösevorgang des Insassen des autonom fahrenden Fahrzeugs herzustellen; und
wobei die Steuereinheit (404) ferner dazu ausgebildet ist, entsprechend den Steuerinformationen des autonom fahrenden Fahrzeugs zu prüfen, ob der Agent der Cloud ein registrierter berechtigter Führer des autonom fahrenden Fahrzeugs ist, und das Fahren des autonom fahrenden Fahrzeugs zu steuern, wenn der Agent der Cloud ein registrierter berechtigter Führer des autonom fahrenden Fahrzeug ist; und
wobei die Steuereinheit (404) ferner dazu ausgebildet ist, Verkehrsumgebungsinformationen des autonom fahrenden Fahrzeugs zu erfassen, wobei die Verkehrsumgebungsinformationen des autonom fahrenden Fahrzeugs mindestens eines aus Straßenumgebungsinformationen, Karteninformationen, Hindernisinformationen, In-Vehicle-Umgebungsinformationen und Fahrinformationen des Fahrzeugs umfassen, und das Fahren des autonom fahrenden Fahrzeugs entsprechend den Verkehrsumgebungsinformationen des autonom fahrenden Fahrzeugs und den Steuerinformationen des autonom fahrenden Fahrzeugs zu steuern.

4. Vorrichtung (400) nach Anspruch 3, wobei die Meldeeinheit (402) ferner für Folgendes ausgebildet ist:
Erfassen vom Echtzeitbildern innerhalb des autonom fahrenden Fahrzeugs und/oder außerhalb des autonom fahrenden Fahrzeugs; und
Hochladen der Echtzeitbilder in die Cloud, um dem Agent der Cloud zu ermöglichen, auf der Grundlage der Echtzeitbilder einen Auslösevorgang entsprechend der Auslöseanweisung durchzuführen oder einen Auslösevorgang entsprechend den Steuerinformationen durchzuführen.

5. Nichtflüchtiges computerlesbares Speichermedium, auf dem Computeranweisungen gespeichert sind, die bei Ausführung durch einen Computer bewirken, dass der Computer das Verfahren nach einem der Ansprüche 1 bis 2 durchführt.

6. Computerprogrammprodukt, das ein Computerprogramm aufweist, wobei bei Ausführung des Computerprogramms durch einen Prozessor das Verfahren nach einem der Ansprüche 1 bis 2 durchgeführt wird.

7. Autonom fahrendes Fahrzeug, das die Vorrichtung zur Steuerung des autonom fahrenden Fahrzeugs nach Anspruch 3 aufweist.

## Revendications

1. Procédé permettant de commander un véhicule à conduite autonome, comprenant, par un appareil compris dans le véhicule à conduite autonome :
la construction (101) d'une liaison de communication entre un véhicule à conduite autonome et un cloud ;
le fait de rapporter (102), en fonction de la liaison de communication, des informations d'urgence fournies par un passager du véhicule à conduite autonome au cloud ;
la réception (103) d'informations de commande du véhicule à conduite autonome envoyées en retour par le cloud, les informations de commande du véhicule à conduite autonome étant envoyées par le cloud en réponse à une opération de déclenchement d'un agent du cloud en fonction des informations d'urgence ; et
la commande (104) de la conduite du véhicule à conduite autonome selon les informations de commande du véhicule à conduite autonome,
dans lequel la construction d'une liaison de communication entre un véhicule à conduite autonome et un cloud comprend :
la construction de la liaison de communication entre le véhicule à conduite autonome et le cloud en réponse à une opération de déclenchement du passager du véhicule à conduite autonome ;
la commande de la conduite du véhicule à conduite autonome selon les informations de commande du véhicule à conduite autonome comprend :
le fait de vérifier, selon les informations de commande du véhicule à conduite autonome, si l'agent du cloud est un opérateur légitime enregistré du véhicule à conduite autonome ; et la commande de la conduite du véhicule à conduite autonome si l'agent du cloud est un opérateur légitime enregistré du véhicule à conduite autonome, et
l'acquisition d'informations d'environnement de trafic du véhicule à conduite autonome, les informations d'environnement de trafic du véhicule à conduite autonome comprenant au moins l'une parmi des informations d'environnement routier, des informations cartographiques, des informations d'obstacle, des informations d'environnement à bord du véhicule et des informations de conduite du véhicule ; et la commande de la conduite du véhicule à conduite autonome selon les informations d'environnement de trafic du véhicule à conduite autonome et les informations de commande du véhicule à conduite autonome.

2. Procédé selon la revendication 1, dans lequel le procédé comprend en outre :
la collecte d'images en temps réel à l'intérieur du véhicule à conduite autonome et/ou à l'extérieur du véhicule à conduite autonome ; et
le téléversement des images en temps réel vers le cloud pour permettre à l'agent du cloud de mettre en oeuvre une opération de déclenchement correspondant à l'instruction de déclenchement ou de mettre en oeuvre une opération de déclenchement correspondant aux informations de commande en fonction des images en temps réel.

3. Appareil (400) permettant de commander un véhicule à conduite autonome, comprenant :
une unité de construction (401) configurée pour construire une liaison de communication entre un véhicule à conduite autonome et un cloud ;
une unité de rapport (402) configurée pour rapporter, en fonction de la liaison de communication, des informations d'urgence fournies par un passager du véhicule à conduite autonome au cloud ;
une unité de réception (403) configurée pour recevoir des informations de commande du véhicule à conduite autonome, envoyées en retour par le cloud, les informations de commande du véhicule à conduite autonome étant envoyées par le cloud en réponse à une opération de déclenchement d'un agent du cloud en fonction des informations d'urgence ; et
une unité de commande (404) configurée pour commander la conduite du véhicule à conduite autonome selon les informations de commande du véhicule à conduite autonome,
dans lequel l'unité de construction (401) est spécifiquement configurée pour construire la liaison de communication entre le véhicule à conduite autonome et le cloud en réponse à une opération de déclenchement du passager du véhicule à conduite autonome, et
l'unité de commande (404) est configurée en outre pour vérifier, selon les informations de commande du véhicule à conduite autonome, si l'agent du cloud est un opérateur légitime enregistré du véhicule à conduite autonome ; et commander la conduite du véhicule à conduite autonome si l'agent du cloud est un opérateur légitime enregistré du véhicule à conduite autonome ; et l'unité de commande (404) est configurée en outre pour acquérir des informations d'environnement de trafic du véhicule à conduite autonome, les informations d'environnement de trafic du véhicule à conduite autonome comprenant au moins l'une parmi des informations d'environnement routier, des informations cartographiques, des informations d'obstacle, des informations d'environnement à bord du véhicule et des informations de conduite du véhicule ; et commander la conduite du véhicule à conduite autonome selon les informations d'environnement de trafic du véhicule à conduite autonome et les informations de commande du véhicule à conduite autonome.

4. Appareil (400) selon la revendication 3, dans lequel l'unité de rapport (402) est configurée en outre pour :
collecter des images en temps réel à l'intérieur du véhicule à conduite autonome et/ou à l'extérieur du véhicule à conduite autonome ; et
téléverser les images en temps réel vers le cloud pour permettre à l'agent du cloud de mettre en oeuvre une opération de déclenchement correspondant à l'instruction de déclenchement ou de mettre en oeuvre une opération de déclenchement correspondant aux informations de commande en fonction des images en temps réel.

5. Support de stockage non transitoire lisible par ordinateur stockant des instructions d'ordinateur, qui, lorsqu'elles sont exécutées par un ordinateur, amènent l'ordinateur à mettre en oeuvre le procédé selon l'une quelconque des revendications 1 à 2.

6. Produit programme d'ordinateur, comprenant un programme d'ordinateur, dans lequel, lorsque le programme d'ordinateur est exécuté par un processeur, le procédé selon l'une quelconque des revendications 1 à 2 est mis en oeuvre.

7. Véhicule à conduite autonome, comprenant l'appareil permettant de commander un véhicule à conduite autonome selon la revendication 3.
